# EUROPEAN PATENT APPLICATION

(11) **EP 2 190 177 A1**
(43) Date of publication of application: **26.05.2010**
(21) Application number: 09802411.0
(22) Date of filing: 28.07.2009
(51) Int. Cl.: H04M 3/523

(54) **NOTIFYING METHOD AND SYSTEM OF THE CALL CENTER**

(30) Priority: 29.07.2008 CN 200810134578
(71) Applicant: Huawei Technologies Co., Ltd., Longgang District, Shenzhen Guangdong 518129 (CN)
(72) Inventor: GAO, Zhuo, Shenzhen Guangdong 518129 (CN)
(74) Representative: Thun, Clemens
(86) International application number: PCT/CN2009/072943
(87) International publication number: WO 2010/012218

(57) **Abstract**

A notification method and a notification system of a call center are disclosed. The method includes that the call center establishes a session with a client, inquires state information of agents, and if there is no idle agent, places the session in a waiting queue to wait for an idle agent allocated, and synchronously plays broadcast media for the client corresponding to the session in the waiting queue. In the embodiment of the invention, services with the same content are provided for part or all of the clients of the sessions in a waiting state by the broadcast way Compared with a unicast way adopted in the prior art, the same content is not required to be respectively and repeatedly played for various client, and the clients of the sessions in the waiting state exit the call center after obtaining the desired information, which relieves queuing pressure of the call center, saves waiting time of the clients in sessions and increases work efficiency of the call center.

## Description

The application claims priority to Chinese patent application No. 200810134578.0, filed on July 29th, 2008, entitled "notification method and system of call center". The content of the above identified application is incorporated herein by reference in its entirety.

### FIELD OF THE INVENTION

The invention relates to the technical field of communication, and in particular to a notification method and a notification system of a call center.

### BACKGROUND

A call center is a multimedia customer service center which integrates multiple access modes such as telephone, fax, Internet, wireless data, etc. The call center makes full use of modem communication and computer technologies to process a large number of different incoming telephone call and outgoing telephone call services automatically and neatly.

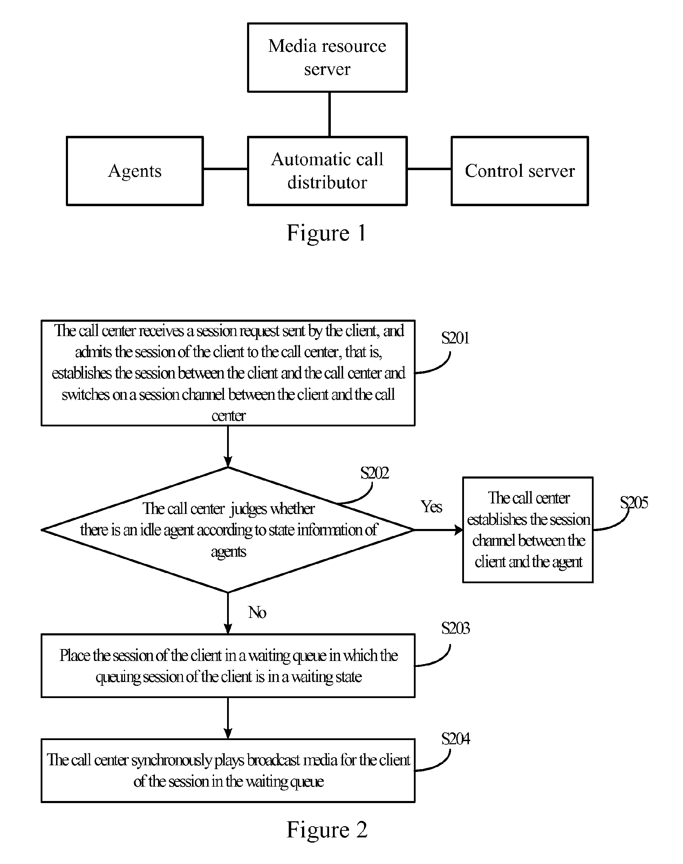

The call center adopts a computer and telephony integrator (CTI). As shown in Figure 1, the call center includes agents, a media resource server, an automatic call distributor (ACD) and a control server. The working process is as follows:

A session of a client enters the call center, and the call center judges whether there is an idle agent, if there is an idle agent, allocate the idle agent to the client; if there is not an idle agent, place the session of the client in a queue. The session in the queue is in a waiting state. The media resource server provides services for the client of the session in the waiting state. When there are idle agents in the call center, the idle agents are allocated to the sessions in the waiting state one by one according to a First-In First-Out (FIFO) queuing mechanism.

The problems consulted by the clients in the same waiting queue are the same problem or similar problems after the clients are admitted to the call center, and the agents repeatedly perform the same service operation, which results in low work efficiency of the call center and prolongs the waiting time of the session.

### SUMMARY

Various embodiments of the invention provide a notification method and a notification system of a call center to improve work efficiency of the call center and save waiting time of customers.

The embodiments of the invention is realized by the following technical solutions:

A notification method of a call center includes the following steps: establishing, by a call center, a session with a client; inquiring state information of agents, and if there is no idle agent, placing the session in a waiting queue to wait for an idle agent; and synchronously playing broadcast media for the client corresponding to the session in the waiting queue.

A notification system of a call center includes a session module, a first judging module, a queue module and a broadcasting module.

The session module is configured to establish a session with a client.

The first judging module is configured to inquire state information of agents and judge whether there is an idle agent after the session module establishes the session.

The queue module is configured to place the session established by the session module in a waiting queue to wait for an idle agent allocated if there is no idle agent according to a judging result of the first judgment module.

The broadcasting module is configured to synchronously play broadcast media for the client corresponding to the session in the waiting queue.

In the embodiments of the invention, services with the same content are provided for part or all of the clients in a waiting state by way of broadcasting. Compared with a unicast way adopted in the prior art, the same content is not required to be respectively and repeatedly played for various clients, and the clients of the session in the waiting state exit the call center after obtaining the desired information, which relieves queuing pressure of the call center, saves waiting time of the customers of the sessions and improves work efficiency of the call center.

### BRIEF DESCRIPTION OF THE DRAWINGS

To clearly describe the technical solutions in the embodiments of the invention or the prior art, accompanying drawings which are used in the description of the embodiments or the prior art are briefly introduced as follows. Obviously, the accompanying drawings are described below only for some embodiments of the invention, and other accompanying drawings can be obtained by those skilled in the art according to the accompanying drawings without creative labor.

Figure 1 is a schematic diagram of a system architecture of a call center in the

### prior art;

Figure 2 is a flow schematic diagram of a notification method of a call center according to an embodiment of the invention;

Figure 3 is a flow schematic diagram of an initiative notification method of a call center according to an embodiment of the invention;

Figure 4 is a flow schematic diagram of a notification method of a call center based on the requirement of a client according to an embodiment of the invention;

Figure 5 is a flow schematic diagram of a notification method of a call center in an emergency according to an embodiment of the invention; and

Figure 6 is an architecture schematic diagram of a notification system of a call center according to an embodiment of the invention.

### DETAILED DESCRIPTION

The technical solutions of the embodiments of the invention are described clearly and fully by reference to the accompanying drawings of the embodiment of the invention. Obviously, the embodiments are described here for only some embodiments of the invention instead of all of the embodiments. Based on the embodiments of the invention, the other embodiments obtained by those skilled in the art without creative labor fall in the protection scope of the invention.

Embodiment one

In order to solve the problems of low work efficiency of the call center and long waiting time of clients, the embodiment of the invention provides a notification method of a call center. As shown in Figure 2, the method includes the following steps:

In Step S201, the call center receives a session request sent by the client, and admits the session of the client to the call center, that is, establishes the session between the client and the call center and switches on a session channel between the client and the call center.

In Step S202, the call center judges whether there is an idle agent according to state information of agents. Step S203 is executed if there is an idle agent. Step S205 is executed if there is not an idle agent.

In Step S203, the session of the client is placed in a waiting queue in which the queuing session of the client is in a waiting state. The way of placing the session of the client in a waiting queue can be obtained by reference to the conventional way, for example, placing session information corresponding to the client in the waiting queue.

In the step S202 and the step S203, the call center can obtain the current state information of all agents in the call center in a real-time manner, judge whether there is an idle agent according to the state information, and place the session of the client in the queue under uniform signaling control of a control server in the event of no idle agent; and the queuing session of the client is in a waiting state.

In Step S204, the call center synchronously plays broadcast media for the client of the session in the waiting queue. That the call center synchronously plays broadcast media means that if the call center currently plays a B segment of a certain broadcast source for the client of the session in the waiting queue, the call center establishes a session channel between the broadcast source and a new client when the session of the new client is placed in the queue so as to directly play the B segment of the broadcast source for the client.

Compared with the existing solution that background music is played from the beginning, no time delay of the broadcast content exits, which facilitates a customer to obtain real-time information of the call center, and provides a condition for the clients of the sessions in the waiting queue to synchronously participate in interactive broadcasting of the call center.

In addition, the call center needs to respectively play the same media for various clients in the prior art, that is, once the session of a new client is admitted, the call center needs to establish a session channel, then play the media content from the beginning and send the media content to the newly admitted client through the session channel; at that moment, playing speeds of the media content among various different clients are different, the call center must establish N playing speeds respectively for all N clients, and each playing speed is for only one client. In the technical solution of the embodiment, the call center needs to establish only one playing speed and then just send the content played at the playing speed to various clients. Compared with the prior art, the technical solution of the embodiment reduces consumption of a resource configured to manage the playing speed to 1/N of that in the prior art, which greatly reduces the resource consumption and greatly increases the work efficiency of the call center.

In Step S205, the call center establishes the session channel between the client and the agent.

Before the step S204, the call center also needs to establish the session channels between a broadcast source and multiple broadcast objects to synchronously play broadcast; the broadcast source can be a media file or an agent, and the broadcast media is generated by the broadcast source, and the broadcast media is content of the media file corresponding to the broadcast source or voice content of the agent; and the broadcast obj ects are the clients of the sessions in the waiting queue. The establishing of the session channel can be realized by a slot time interchange digital switch technology as follows:

The establishing of the session channel can be realized by the slot time interchange digital switch technology, for example, an IDT72V70840 slot time interchange digital switch chip which has 32 HWs (High Way) inputs and 32 HW outputs. An HW is divided into 32 time slots, therefore, an IDT72V70840 chip has 32*32=1024 inputs and 1024 outputs, and different source time slots as inputs and target time slots as outputs are connected to achieve the exchange purpose.

In order to complete connection between an input channel (speaking) and an output channel (listening), just a memory address connected with the target HW and the target time slot is desired, and then data of the source HW and the source time slot are stored in the memory address to complete the connection so as to achieve the exchange purpose. The stored data are in a data storage format same as that of the memory. When an IP subscriber calls the call center, the call center firstly converts an IP message into the data which can be received by the slot time interchange digital switch chip and then performs exchange.

In order to establish a broadcast channel, that is, to complete connection between an input channel (speaking) and multiple output channels (listening), the connection between the input channel (speaking) and multiple output channels (listening) is repeatedly set. The memory synchronously forwards the received data of the input channel to multiple output channels.

Other ways may be used to establish the broadcast channel between a broadcast source and multiple broadcast objects. For example, a software or hardware technology is adopted to copy a broadcast media stream and transmit the media stream to a new broadcast object once the new broadcast object joins; alternatively, a splitting module is set between the broadcast source and the broadcast object, configured to establish an input session channel between the splitting module and the broadcast source to receive the media content sent from the broadcast source and configured to establish multiple output session channels between the splitting module and the broadcast objects to simultaneously send the media content to multiple broadcast obj ects through the output session channels.

In the embodiments of the invention, services with the same content are provided for part or all of the subscribers in the waiting state by the broadcast way. Compared with the unicast way adopted in the prior art, the same content is not required to be repeatedly and respectively played for various clients, which thus saves waiting time of the customers and increases work efficiency of the call center.

Embodiment Two

The call center and the notification method of the call center in the embodiments of the invention are more specifically described by reference to the accompanying drawings as follows.

In the step S204, that the call center synchronously plays the broadcast media for the clients of the sessions in the waiting queue is realized by two methods: one is that the call center initiatively broadcasts, and the other one is that the call center broadcasts according to requirements of the clients. The two methods are respectively described in details as follows:

The first method: the call center initiatively broadcasts

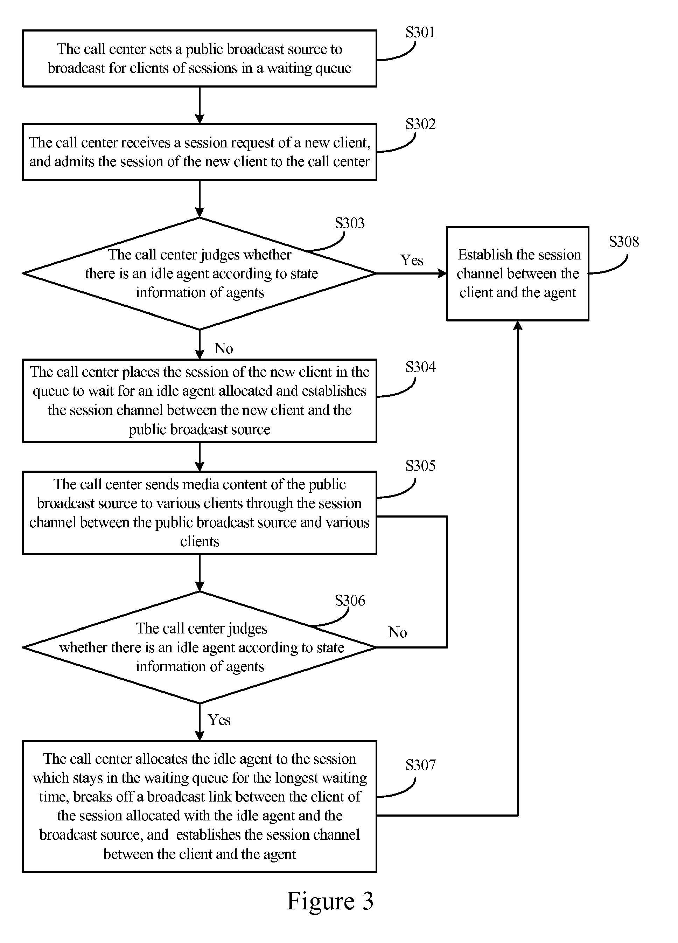

Figure 3 is a flow schematic diagram of an initiative notification method of a call center in the embodiment of the invention. As shown in Figure 3, the initiative notification method includes:

In Step S301, the call center sets a public broadcast source to broadcast for clients of sessions in a waiting queue, that is, establishes a session channel between a broadcast source and multiple broadcast objects consisting of the clients of the sessions in the waiting queue to synchronously play broadcast media. The broadcast source meets preference of the mass and is suitable for the mass to listen to. The broadcast source may be a media file provided by a media resource manager or an agent.

In Step S302, the call center receives a session request of a new client, and admits the session of the new client to the call center.

In Step S303, the call center judges whether there is an idle agent according to state information of agents. Step S304 is executed if there is not an idle agent. The judging process is the same with that in the Step S202. Step S308 is executed if there is an idle agent.

In Step S304, the call center places the session of the new client in the queue to wait for an idle agent allocated and establishes the session channel between the new client and the public broadcast source.

In Step S305, the call center sends media content of the public broadcast source to various clients through the session channel between the public broadcast source and various clients so as to provide a content service of the public broadcast source for the clients of the sessions in the waiting queue.

In Step S306, the call center judges whether there is an idle agent. Step S307 is executed if there is an idle agent. Step S305 is executed if there is not an idle agent.

In Step S307, the call center allocates the idle agent to the session which stays in the waiting queue for the longest waiting time, breaks off a broadcast link between the client of the session allocated with the idle agent and the broadcast source; and Step S308 is executed.

In Step S308, the call center establishes the session channel between the client and the agent.

The second method: the call center broadcasts according to requirements of clients.

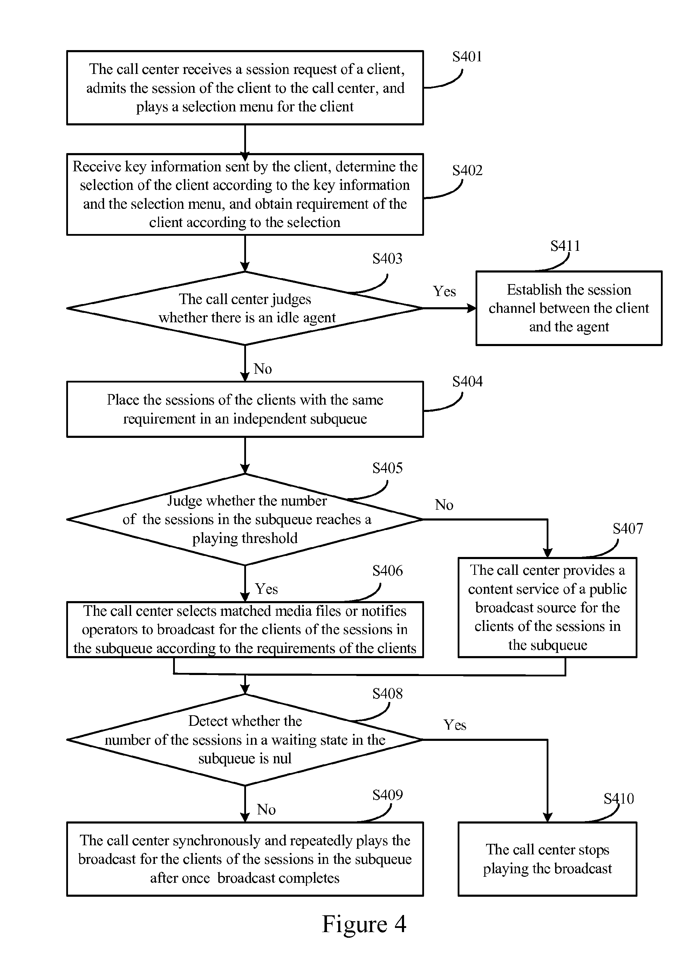

Figure 4 is a flow schematic diagram of a notification method of a call center based on requirements of clients in the embodiment of the invention. As shown in Figure 4, the notification method includes:

In Step S401, the call center receives a session request of a client, admits the session of the client to the call center, and plays a selection menu for the client.

For example, after the session of the client is admitted to the call center, the call center plays the selection menu for the client; for example: welcome to call XXXX, press 1 to consult services; press 2 to apply a service; and press 3 to inquire services; after the customer selects 3, furthermore, press 31 to inquire a prize-winning number of the Xth lottery, press 32 to inquire the RMB exchange rate, and press 33 to inquire a preferential telephone charge activity, etc.

In Step S402, key information sent by the client is received, the selection of the client is determined according to the key information and the selection menu, and requirement of the client is obtained according to the selection.

In Step S403, the call center judges whether there is an idle agent. Step S404 is executed if there is not an idle agent. Step S411 is executed if there is an idle agent.

In Step S404, the sessions of the clients with the same requirement are placed in an independent subqueue which is another representation of the waiting queue.

The corresponding subqueues are determined according to different requirements of the clients, and the sessions of the clients with the same requirement or similar requirements are placed in the same subqueue. For example, the sessions of the clients with the requirements for consulting the same problem are placed in the same subqueue.

In Step S405, it is judged whether the number of the sessions in the subqueue reaches a playing threshold which can be set independently for each subqueue or set when the subqueue is established or set by a system before the subqueue is established; the clients initiate the sessions the number of which equals the number of the customers through the clients. Step S406 is executed if the number of the sessions in the subqueue reaches the playing threshold. Step S407 is executed if the number of the sessions in the subqueue does not reach the playing threshold.

In Step S406, the call center selects matched media files or notifies agents to broadcast for the clients of the sessions in the subqueue according to the requirements of the clients when the number of the sessions in the subqueue reaches the playing threshold. For example, if the clients of all sessions in the subqueue require information about the preferential telephone charge activity, a media file in which the information about the preferential telephone charge activity is stored is played for the clients of the sessions in the subqueue.

In Step S407, the call center provides a content service of a public broadcast source for the clients of the sessions in the subqueue when the number of the sessions in the subqueue does not reach the playing threshold. The public broadcast source is the content which is played for the clients of the sessions in all subqueues the session number of which does not reach the playing threshold. The call center stops playing the content of the public broadcast source for the clients of the sessions in the subqueue the session number of which reaches the playing threshold when the number of sessions in the subqueue reaches the playing threshold, breaks off the session channel between the client of each session in the subqueue the session number of which reaches the playing threshold and the public broadcast source, establishes a session channel between the client of each session in the subqueue the session number of which reaches the playing threshold and the broadcast source matched with the requirement of the client, and plays the media file matched with the requirement or voice input by the agent by a microphone for the client of each session in the subqueue the session number of which reaches the playing threshold.

By the step S406 and the step S407, the customer exits the call center after listening in the broadcast and having the requirements satisfied; and new clients enter the subqueue at different time.

In Step S408, it is detected whether the number of the sessions in a waiting state in the subqueue is null. Step S409 is executed if the number of the sessions in a waiting state in the subqueue is not null. Step S410 is executed if the number of the sessions in a waiting state in the subqueue is null.

In the step, detecting can be triggered by setting a timer for the subqueue. The timer is configured to time, and the length of time can be set according to experiences or actual requirements and can be the time of completing broadcast once. When the playing time of the broadcast is longer, a suitable value can be set to capture dynamic information of the subqueue in a real-time manner.

In Step S409, the call center synchronously and repeatedly plays the broadcast for the clients of the sessions in the subqueue after once broadcast completes.

In Step S410, the call center stops playing the broadcast.

In the steps S409 to S410, in a different way, that is, judging whether the session in the waiting state in the queue is null; if the session in a waiting state in the queue is null, stopping playing the broadcast media for the queue in which the session in a waiting state is null; if the session in a waiting state in the queue is not null, continuing playing the broadcast media for the queue in which the session in waiting state is not null; and repeatedly playing the broadcast media after completing broadcast once.

In Step S411, the session channel is established between the client and the agent.

In the step above, the call center determines the subqueue based on the requirement of the client, sets the playing threshold for the subqueue. As the sessions of the clients are admitted to the call center in succession, the number of the sessions in the subqueue reaches the playing threshold, and the call center selects the matched broadcast sources according to the requirements of the clients to broadcast for the clients of the sessions in the subqueue. Generally, if the playing threshold is too high, the customer will spend long time on waiting to hear the matched broadcast media, which will results in that the clients of the sessions in the subqueue directly leave or wait indefinitely. If the playing threshold is too low, the work efficiency can not be increased as high as possible since the matched broadcast sources are limited and system resources are occupied by the broadcast. Therefore, the playing threshold can be set according to a statistical empiric value of the call center.

The timer is set for the subqueue to trigger detecting whether the number of the sessions in the subqueue is null, which avoids indefinite playing of the broadcast sources after the session channels of all clients of the sessions in the queue are broken off, and saves the broadcast sources. When the subqueue has the sessions, the broadcast source can be repeatedly played until the session in the subqueue is null. That the customer in the subqueue is null is classified into two manners: one is that the client in the session automatically exits the call center after obtaining the desired information by the broadcast; and the other one is that the call center allocates the idle agents to the clients of the sessions in the subqueue one by one and provides one-to-one services.

The steps above further include: preferably allocating the idle agent to the subqueue in which the broadcast source of the current session channel is the public broadcast source and the session number is the maximum session number when there is an idle agent in the call center. The subqueues in which the broadcast source of the current session channel is the public broadcast source include two categories: one is the subqueue in which the number of sessions is smaller than the playing threshold, and the other one is the subqueue in which the number of sessions reaches the playing threshold and the matched broadcast source can not be found due to limitation of the system resources. The allocation process is described as follows:

comparing the numbers of the sessions of various subqueues in which the broadcast source is the public broadcast source of the current session channel;

determining a subqueue with the maximum session number; and

if there is an idle agent in the call center, preferably allocating the idle agent to the session in the subqueue with the maximum session number, switching the session channel between the clients of all sessions in the waiting subqueue with the maximum session number and the public broadcast source to the session channel between the clients and the idle agents, and the idle agent synchronously playing voice for the clients of all sessions in the waiting queue according to the requirements of the clients.

In the steps above, the sessions in the subqueue are in the waiting state all the time. If the clients of the sessions in the subqueue do not exit the call center, the idle agents are required to be allocated to the clients of the sessions in the subqueue based on a first-in-first-out rule. Therefore, the steps further include: the call center switching the session channel between the client and the broadcast source to the session channel between the client and the agent when the call center allocates the idle agent to the client of the session in the waiting queue. Generally, the client of the session in the subqueue exits the call center after that the client receives the matched broadcast and its requirements being satisfied, which relieves queuing pressure of the call center. Moreover, the services with the same content are simultaneously provided for the clients of all sessions in the subqueues with the same requirement or similar requirements by the broadcast way, which increases work efficiency of the call center indeed and saves the waiting time of the clients of the sessions in the waiting queue compared with a unicast way adopted in the prior art.

The call center initiatively broadcasts in a special manner:

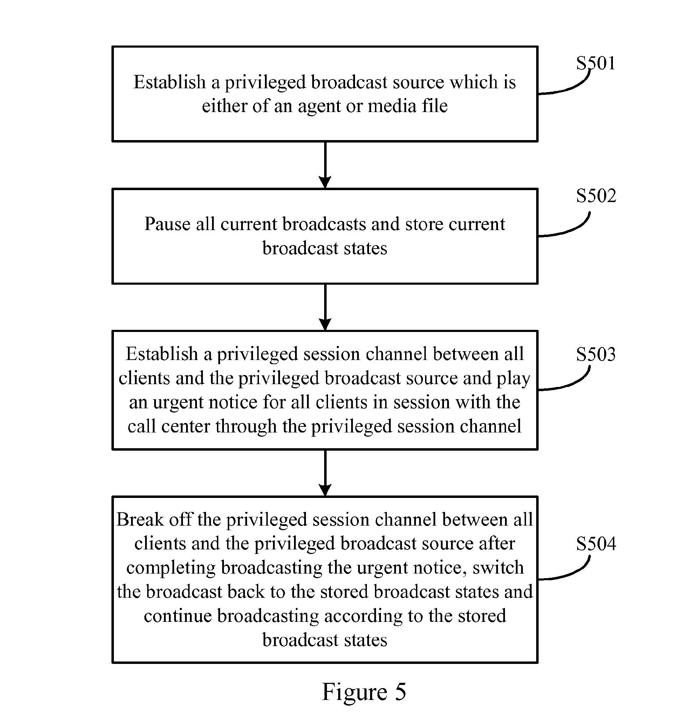

Intensively broadcast for all clients of the call center in an emergency. For example, an early earthquake warning notice is issued to all clients of the call center. As shown in Figure 5, the special manner includes the following steps:

In Step S501, establish a privileged broadcast source which is either of an agent or media file.

In Step S502, pause all current broadcasts and store current broadcast states.

In Step S503, establish a privileged session channel between all clients and the privileged broadcast source and play an urgent notice for all clients in session with the call center through the privileged session channel. The establishing of the privileged session channel can be also realized by the slot time interchange digital switch technology or other software or hardware technology mentioned above, and is not repeated herein.

In Step S504, break off the privileged session channel between all clients and the privileged broadcast source after completing broadcasting the urgent notice, switch the broadcast back to the stored broadcast states and continue broadcasting according to the stored broadcast states.

The privileged broadcast source is intensively broadcast for all clients of the call center in the emergency, and therefore, the urgent notice can be broadcast at the maximum efficiency by initiative broadcasting of the call center.

Embodiment Three

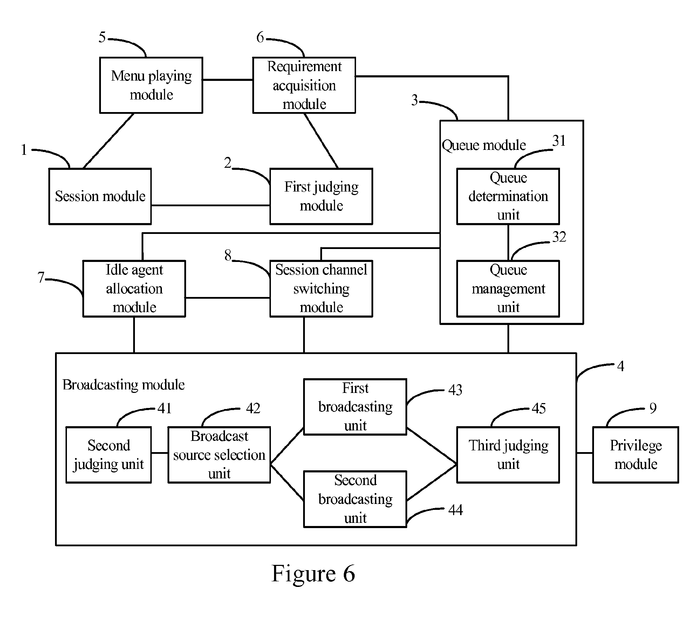

In order to solve the problems of low work efficiency of a call center and long waiting time of customers, the embodiments of the invention provides a notification system of a call center. As shown in Figure 6, the system includes a session module 1, a first judging module 2, a queue module 3 and a broadcasting module 4.

The session module 1 is configured to establish a session with a client according to a session request of the client.

The first judging module 2 is configured to inquire state information of agents and judge whether there is an idle agent after the session module 1 establishes the session.

The queue module 3 is configured to place the session established by the session module 1 in a waiting queue to wait for the idle agent allocated if there is no idle agent according to a judging result of the first judging module 2.

The broadcasting module 4 is configured to synchronously play broadcast media for the client corresponding to the session in the waiting queue.

The call center can initiatively broadcast for the clients admitted to the call center through functions of the various modules.

Furthermore, in order to relieve the queuing pressure of the call center at the maximum efficiency by broadcasting, the broadcast media content needs to be matched with the requirement of the client, and therefore, the system further includes a menu playing module 5 and a requirement acquisition module 6.

The menu playing module 5 is configured to play a selection menu after the session module 1 establishes the session.

The requirement acquisition module 6 is configured to, according to key information returned by the client, determine requirements of the client and trigger the first judgment module 2 to inquire after the menu playing module 5 plays the selection menu.

In the system, based on the requirement of the client, the queue module 3 further includes a queue determining unit 31 and a queue management unit 32.

The queue determining unit 31 is configured to determine a waiting queue corresponding to the requirements based on the requirements of the client determined by the requirement acquisition module 6 if there is no idle agent according to the judging result of the first judging module 2.

The queue management unit 32 is configured to place the session established by the session module 1 in the waiting queue corresponding to the requirements to wait for the idle agent according to the waiting queue determined by the queue determining unit 31. The sessions of the clients with the same requirements are placed in the same waiting queue.

According to the requirement of the client, the broadcasting module 4 includes a second judging unit 41, a broadcast source selection unit 42, a first broadcasting unit 43 and at least one of independent second broadcasting unit 44.

The second judging unit 41 is configured to judge whether number of the sessions in the waiting queue is larger than a set playing threshold. Corresponding to the second judging unit 41, a threshold setting subunit can be configured in the queue management unit 32 to set the threshold so as to set a counter to obtain the number of the sessions. The threshold can be set uniformly by the system generally and the number of the sessions can be obtained by other ways.

The broadcast source selection unit 42 is configured to select a matched broadcast source for the clients of all sessions in the waiting queue according to the requirements of the clients of the sessions in the waiting queue in which the number of the sessions is larger than the playing threshold if the number of the sessions in the waiting queue is larger than the playing threshold, according to the judging result of the second judgment unit 41; and configured to select a public broadcast source for the clients of all sessions in the waiting queue if the number of the sessions in the waiting queue is smaller than the playing threshold.

The first broadcasting unit 43 is configured to synchronously play the broadcast media of the public broadcast source for the clients of all sessions in the queue in which the number of the sessions is smaller than the playing threshold according to a selection result of the broadcast source selection unit 42.

At least one of independent second broadcasting unit 44 is configured to respectively and synchronously play the broadcast media of the broadcast source which is selected by the broadcast source selection unit and is matched with the requirements of the clients for the clients in the queue in which has the number of the sessions is larger than the playing threshold according to a selection result of the broadcast source selecting unit 42.

The broadcasting module 4 further includes a third judging unit 45.

The third judgment unit 45 is configured to judge whether the session in a waiting state in the queue is null; if the session in a waiting state in the queue is null, stop playing the broadcast media for the queue in which the session in a waiting state is null; if the session in a awaiting state is not null, continue playing the broadcast media for the queue in which the session in a waiting state is not null; and repeatedly play the broadcast media after ending broadcast once, in which the judgment can be performed after completing the broadcast once.

In the system, the state information of the agents in the call center changes dynamically. When there is an idle agent in the call center, the agent is required to be allocated to the session in the independent queue so as to broadcast according to the requirement of the client or to provide a one-to-one service for the client of the session with the longest waiting time in all queues. Therefore, as shown in Figure 6, the notification system further includes an idle agent allocation module 7 and a session channel switching module 8.

The idle agent allocation module 7 is configured to allocate idle agent s to the sessions in the queue in which the current broadcast source is the public broadcast source and the number of the sessions in the waiting state is the maximum, and determine a waiting queue; or allocate an idle agent to the client of the session with the longest waiting time and determine a session.

The session channel switching module 8 is configured to switch a session channel between the clients of all sessions in the waiting queue determined by the idle agent allocation module 7 and the public broadcast source to the session channel between the clients and the idle agent s which synchronously play voice for the clients of all sessions in the waiting queue according to the requirements of the clients, or configured to switch the session channel between the client corresponding to the session determined by the idle agent allocation module 7 and the broadcast source to the session channel between the client and the idle agent.

In order to broadcast an urgent notice at the maximum efficiency in an emergency, the notification system further includes a privilege module 9.

The privilege module 9 is configured to switch the broadcast sources of the clients in all queues to a privileged broadcast source and store the current broadcast states of various queues; and switch the broadcast sources of the clients of the sessions in all queues to the original broadcast sources according to the stored broadcast states of various queues after completing playing the broadcast media of the privileged broadcast source.

In the embodiments of the invention, services with the same content are provided for part or all of the clients of the sessions in the waiting state by broadcast way. Individual services are provided for the clients of all the sessions in different waiting queues according to the requirements of the clients. Therefore, the clients of the sessions in the waiting state can also obtain the desired information, and the clients can exit the call center after obtaining the desired information, which relieves queuing pressure of the call center. Compared with the system shown in Figure 1 which allocates the idle agents to the sessions in the waiting state one by one based on a first-in-first-out queuing mechanism and uniformly provides the service (generally, the service is just the background music preset by the system) for the clients of the sessions in the waiting state, the notification system increases work efficiency of the call center, and saves waiting time of the client in the session. On the other hand, the urgent notice can be broadcast at the maximum efficiency by the notification method and the notification system of the call center provided in the embodiments of the invention. Therefore, the notification method and the notification system of the call center provided in the embodiments of the invention can be widely applied to service centers related to banks, airlines, railway, insurance, securities, real estate, tourism, commercial building, medical care, governments, etc.

People skilled in this art can understand that: the implementation of all or part of the steps in the above-mentioned method embodiments can be completed by hardware related to program instructions. The program may be stored in a computer readable storage medium. During running, the program executes the steps comprising the above-mentioned method embodiments. The storage medium comprises the various media which are able to store program codes such as ROM, RAM, diskette or compact disc, etc.

Finally, it should be understood that the above embodiments are only used to illustrate, but not to limit the technical solution of the present disclosure. In despite of the detailed description of the present disclosure with reference to above exemplary embodiments, it should be understood that various modifications, changes or equivalent replacements can be made by those skilled in the art without departing from the scope of the present disclosure and covered in the claims of the present disclosure.

## Claims

1. A notification method of a call center, comprising:
establishing, by the call center, a session with a client;
inquiring state information of agents, and if there is no idle agent, placing the session in a waiting queue to wait for an idle agent allocated; and
synchronously playing broadcast media for the client corresponding to the session in the waiting queue.

2. The method according to claim 1, wherein before the synchronously playing broadcast media for the client corresponding to the session in the waiting queue, the method further comprises:
establishing session channels between a broadcast source and multiple clients corresponding to multiple sessions in the waiting queue to synchronously play the broadcast media, wherein the broadcast source is a media file or an agent, and the broadcast media is content of the media file or voice content of the agent, and the broadcast media is generated by the broadcast source.

3. The method according to claim 1 or 2, wherein the inquiring state information of agents, and if there is no idle agent, placing the session in a waiting queue to wait for an idle agent allocated comprises:
playing a selection menu for the client;
determining requirements of the client according to key information returned by the client; and
inquiring the state information of the agents, and if there is no idle agent, placing the sessions of the clients with the same requirements in a waiting queue and placing the sessions of the clients with different requirements in different waiting queues.

4. The method according to claim 3, wherein the synchronously playing broadcast media for the client corresponding to the session in the waiting queue comprises:
judging whether the number of the sessions in waiting state in the waiting queue is larger than a set playing threshold; and
if the number is larger than the playing threshold, selecting, by the call center, a matched broadcast source to synchronously play the broadcast media of the matched broadcast source for the clients of all sessions in the waiting queue in which the number of the sessions is larger than the playing threshold according to the requirements of the clients of the sessions in the waiting queue in which the number of the sessions is larger than the playing threshold; or else, selecting, by the call center, a public broadcast source to synchronously play the broadcast media of the public broadcast source for the clients of all sessions in various waiting queues in which the number of the sessions is smaller than the playing threshold.

5. The method according to claim 4, further comprising:
when there is an idle agent in the call center, comparing numbers of the sessions in various waiting queues in which the public broadcast source is the current broadcast source; and
determining the waiting queue with the maximum session number, preferably allocating the idle agent to the sessions in the waiting queue with the maximum session number; switching the session channel between the clients of all sessions in the waiting queue with the maximum session number and the public broadcast source into the session channel between the clients and the idle agent; and synchronously playing, by the idle agent, voice for the clients of all the sessions in the waiting queue with the maximum session number according to the requirements of the clients.

6. The method according to claim 4, wherein after the synchronously playing broadcast media for the client corresponding to the session in the waiting queue, the method further comprises:
detecting whether the number of the sessions in the queue is null; and
stopping, by the call center, playing the broadcast media if the number is null.

7. The method according to claim 1, wherein after the synchronously playing broadcast media for the customer corresponding to the session in the waiting queue, the method further comprises:
establishing a privileged broadcast source which is either of the agent or the media file;
pausing all current broadcasts and storing current broadcast states;
establishing a privileged session channel between all clients and the privileged broadcast source and playing an urgent notice for all clients through the privileged session channel; and
after completing broadcasting the urgent notice, breaking off the privileged session channel between all clients and the privileged broadcast source, switching the broadcasts back to the stored broadcast states and continuing broadcasting according to the stored broadcast states.

8. A notification system of a call center, comprising:
a session module, configured to establish a session with a client;
a first judging module, configured to inquire state information of agents and judge whether there is an idle agent after the session module establishes the session;
a queue module, configured to place the session established by the session module in a waiting queue to wait for an idle agent allocated if there is no idle agent according to a judging result of the first judging module; and
a broadcasting module, configured to synchronously play broadcast media for the client corresponding to the session in the waiting queue.

9. The notification system of a call center according to claim 8, wherein
the notification system further comprises:
a menu playing module, configured to play a selection menu for the client after the session module establishes the session; and a requirement acquisition module, configured to, according to key information returned by the client, determine requirements of the client and trigger the first judging module to inquire after the menu playing module plays the selection menu; and
the queue module comprises:
a queue determining unit, configured to determine a waiting queue corresponding to the requirements based on the requirements of the client determined by the requirement acquisition module if there is no idle agent according to the judging result of the first judging module; and
a queue management unit, configured to place the session established by the session module in the waiting queue corresponding to the requirements to wait for the idle agent according to the waiting queue determined by the queue determining unit, wherein the sessions of the clients with the same requirements are placed in the same waiting queue.

10. The system according to claim 9, wherein the broadcasting module comprises:
a second judging unit, configured to judge whether number of the sessions in the waiting queue is larger than a set playing threshold;
a broadcast source selection unit, configured to:
select a matched broadcast source for the clients of all sessions in the waiting queue in which the number of the sessions is larger than the playing threshold according to the requirements of the clients of the sessions in the waiting queue in which the number of the sessions is larger than the playing threshold if the number of the sessions in the waiting queue is larger than the playing threshold, according to the judging result of the second judging unit; and
select a public broadcast source for the clients of all sessions in the waiting queue if the number of the sessions in the waiting queue is smaller than the playing threshold;
a first broadcasting unit, configured to synchronously play the broadcast media of the public broadcast source for the clients of all sessions in the queue in which the number of the sessions is smaller than the playing threshold according to a selection result of the broadcast source selection unit; and
at least a second broadcasting unit, configured to respectively and synchronously play the broadcast media of the broadcast source which is selected by the broadcast source selection unit and is matched with the requirements of the clients for the clients in the queue in which the number of the sessions is larger than the playing threshold according to a selection result of the broadcast source selection unit.

11. The system according to any one of claims 8 to 10, wherein the broadcasting module further comprises:
a third judging unit, configured to judge whether the session in a waiting state in the queue is null;
if the session in a waiting state in the queue is null, stop playing the broadcast media for the queue in which the session in a waiting state is null;
if the session in a waiting state in the queue is not null, continue playing the broadcast media for the queue in which the session in a waiting state is not null, and repeatedly play the broadcast media after completing broadcast once.

12. The notification system of a call center according to any one of claims 8 to 10, further comprising:
an idle agent allocation module, configured to allocate idle agents to the sessions in the queue in which the current broadcast source is the public broadcast source and the number of the sessions in the waiting state is the maximum; and
a session channel switching module, configured to switch a session channel between the clients of all sessions in the waiting queue determined by the idle agent allocation module and the public broadcast source to the session channel between the clients and the idle agent which synchronously plays voice for the clients of all sessions in the waiting queue according to the requirements of the clients.

13. The system according to any one of claims 8 to 10, further comprising:
a privilege module, configured to:
switch the broadcast sources of the clients in all queues to a privileged broadcast source and store the current broadcast states of various queues; and
switch the broadcast sources of the clients of the sessions in all queues to the original broadcast sources according to the stored broadcast states of various queues after completing playing the broadcast media of the privileged broadcast source.
